# EUROPÄISCHE PATENTSCHRIFT

(11) **EP 1 625 979 B1**
(45) Veröffentlichungstag und Bekanntmachung des Hinweises auf die Patenterteilung: **14.10.2009**
(21) Anmeldenummer: 05104926.0
(22) Anmeldetag: 07.06.2005
(51) Int. Cl.: B60R 21/01, B60T 7/22

(54) **Verfahren und Vorrichtung zur Auslösung einer Notbremsung**
Method and device for triggering an emergency braking
Procédé et dispositif de déclenchement d'une opération de freinage d'urgence

(30) Priorität: 10.08.2004 DE 102004038734
(43) Veröffentlichungstag der Anmeldung: 15.02.2006
(73) Patentinhaber: ROBERT BOSCH GMBH, 70442 Stuttgart (DE)
(72) Erfinder: Lucas, Bernhard, 74354 Besigheim (DE); Wilhelm, Ulf, 71277 Rutesheim (DE); Randler, Martin, 70569 Stuttgart (DE)

(56) Entgegenhaltungen:
- DE-A1- 10 231 557
- DE-A1- 10 231 584
- DE-A1- 19 738 690
- FR-A- 2 769 884
- US-B1- 6 517 172

## Beschreibung

Die vorliegende Erfindung betrifft ein Verfahren und eine Vorrichtung zur Auslösung einer Notbremsung eines Fahrzeugs zur Vermeidung einer Kollision bzw. zur Verminderung der Kollisionsschwere, wobei das Fahrzeug mindestens einen Objektdetektionssensor aufweist, dass in Abhängigkeit der erkannten Objekte ermittelt wird, ob eine Kollision mit einem Objekt bevorsteht und dass in Abhängigkeit der Kollisionswahrscheinlichkeit eine Notbremsung auslösbar ist sowie dass in Abhängigkeit der momentanen Umgebungssituation eine Gefährdung des eigenen Fahrzeugs in Falle einer Notbremsauslösung ermittelt wird, wobei die Auslöseschwelle für die Notbremsung derart veränderbar ist, dass die Wahrscheinlichkeit für eine Fehlauslösung erhöht wird, wenn eine berechnete Gefährdung durch die Notbremsung gering ist und dass die Auslöseschwelle für die Notbremsung derart veränderbar ist, dass die Wahrscheinlichkeit für eine Fehlauslösung verringert wird, wenn eine berechnete Gefährdung durch die Notbremsung höher ist.

### Stand der Technik

Aus der DE 102 31 557 A1 ist ein Verfahren und eine Vorrichtung zum Auslösen und Durchführen einer Verzögerung eines Fahrzeugs zur Vermeidung einer Kollision bekannt, bei welchem mittels einer Vorrichtung zur Abstands- und Geschwindigkeitsregelung des Fahrzeugs Objekte im Sensorerfassungsbereich erkannt und für jedes erkannte Objekt Messgrößen ermittelt werden, die erkannten Objekte aufgrund der ermittelten, zugehörigen Messgrößen verschiedenen Objektklassen zugeordnet werden und aufgrund der Zuordnung der erkannten Objekte zur jeweiligen Klasse die Bewegungstrajektorien der Objekte prädiziert werden. Aus diesen prädizierten Bewegungstrajektorien der Objekte und der zugehörigen, erkannten Objektklasse wird weiterhin ein Kollisionsrisiko ermittelt und bei vorliegen eines vorgebbaren Kollisionsrisikos werden die Verzögerungseinrichtungen des Fahrzeugs in Abhängigkeit des Grades des Kollisionsrisikos angesteuert.

### Kern und Vorteile der Erfindung

Der Kern der vorliegenden Erfindung ist es, ein Verfahren und eine Vorrichtung anzugeben, die einerseits die Wahrscheinlichkeit einer Kollision des eigenen Fahrzeugs mit einem weiteren Objekt ermitteln und zur Kollisionsvermeidung bzw. Kollisionsfolgenminderung eine Notbremsung durchführen können. Da eine automatisch ausgelöste und durchgeführte Notbremsung eine Gefährdung für das eigene Fahrzeug sowie für das Fahrzeugumfeld darstellt, da während der Notbremsung eine Kontrolle des Fahrzeugs nur schwer möglich ist, sowie die Festlegung der Auslöseschwelle mit Schwierigkeiten hinsichtlich deren Schwellenwert verbunden ist, da nur im nachhinein festgestellt werden kann, ob die Notbremsung sinnvoller Weise oder unnötiger Weise ausgelöst wurde, soll die Auslöseschwelle in Abhängigkeit der möglichen Gefährdung, die das Fahrzeug und deren Insassen infolge einer automatischen Notbremsung ausgesetzt sind, verändert werden.

Dies wird erreicht, indem in Verkehrssituationen, in denen eine automatische Notbremsung eine hohe Gefährdung des eigenen Fahrzeugs und dessen Insassen darstellen würde, erst bei einem höheren Kollisionsrisiko ausgelöst wird, als in Fahrsituationen, in denen das Gefährdungsrisiko für das eigene Fahrzeug und dessen Insassen geringer sind. Die Gefährdung des eigenen Fahrzeugs ist beispielsweise hoch, wenn eine stark frequentierte Straße befahren wird und sehr viele weitere Fahrzeuge im Fahrzeugumfeld vorhanden sind, wenn eine hohe Fahrzeuggeschwindigkeit gefahren wird, sowie beispielsweise wenn der Fahrzeugrand infolge einer Bebauung nur wenig Sicherheits- und Auslauffläche bietet. Dementsprechend ist die Gefährdung bei einer möglichen Notbremsung geringer, wenn eine kaum befahrene Straße befahren wird, wenn die eigene Fahrzeuggeschwindigkeit gering ist und/oder wenn sich an den Straßenrand ein freies Feld anschließt, das ausreichend Auslauffläche bietet. Weiterhin kann zur Bestimmung der Gefährdung bei einer automatischen Notbremsung der weitere Fahrbahnverlauf herangezogen werden, indem ausgewertet wird, ob und wieviele Kurven vorausbefindlich sind und welche Krümmungsradien diese aufweisen oder ob man sich auf einer geraden Fahrbahn befindet.

Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise erfolgt eine Fehlauslösung, wenn die Verzögerungseinrichtungen des Fahrzeugs automatisch zur Durchführung einer Notbremsung angesteuert wurden, jedoch während dem automatischen Verzögern des Fahrzeugs sowie kurz nach erfolgtem Stillstand des Fahrzeugs keine Kollision stattgefunden hat.

Weiterhin ist es vorteilhaft, dass die Gefährdung durch die Notbremsung aus den im Fahrzeugumfeld erkannten, bewegten und stehenden Objekten ermittelbar ist. Die Gefährdung durch die Notbremsung ist hierbei ein Maß, das beispielsweise zwischen 0 und 1 liegen kann und angibt, ob während oder kurz nach einer durchgeführten, automatischen Notbremsung des Fahrzeugs ohne Eingriff des Fahrers infolge der automatischen Notbremsung, weitere kritische Verkehrssituationen mit eventuell weiteren Kollisionen entsteht.

Besonders vorteilhaft ist es, dass zur Berechnung der Gefährdung durch die Notbremsung die Anzahl der Fahrspuren der befahrenen Straße, die momentan benutzte Fahrspur, die Verkehrsdichte durch die detektierten, bewegten Objekte der befahrenen Straße, die Eigengeschwindigkeit des Fahrzeugs, die Positionen der stehenden Objekte am Fahrbahnrand, die Kurven im weiteren Fahrbahnverlauf sowie deren Krümmungsradien, die berechnete Kollisionswahrscheinlichkeit oder eine Kombination hieraus ausgewertet wird. Diese Größen sind aus den Empfangsdaten der Objcktsensoren sowie aus einem eventuell vorhandenen Navigationsgerät oder einem Geschwindigkeitsscnsor zur Messung der eigenen Fahrzeuggeschwindigkeit auslesbar und zur Umfeldbewertung heranziehbar, um das Gefährdungsmaß zu bestimmen. Weiterhin ist eine Auslösung einer Notbremsung bei geringerem Kollisionsrisiko sinnvoll, wenn erkannt wurde, dass das Fahrzeug innerorts, in einer 30km/h-Zone oder einer Spielstrasse bewegt wird.

Weiterhin ist es vorteilhaft, dass die im Fahrzeugumfeld detektierten Objekte mittels einer Objektsensorik, die aus einem Radarsensor, aus einem Lasersensor, aus einem Videosensor, einem Ultraschallsensor oder einer Kombination dieser Sensorarten, besteht, erkannt werden.

Weiterhin ist es vorteilhaft, dass mit der Auslösung der Notbremsung Insassenrückhaltesysteme, insbesondere Airbags und/oder Gurtstraffer aktivierbar sind.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein schematisches Blockschaltbild einer Ausführungsform der erfindungsgemäßen Vorrichtung,
- Figur 2: ein Diagramm, das die Abhängigkeit der Fehlauslöserate der automatischen Notbremsung in Verbindung mit dem Gefährdungsgrad darstellt und
- Figur 3: ein Ablaufdiagramm einer Ausführungsform des erfindungsgemäßen Verfahrens.

### Beschreibung von Ausführungsbeispielen

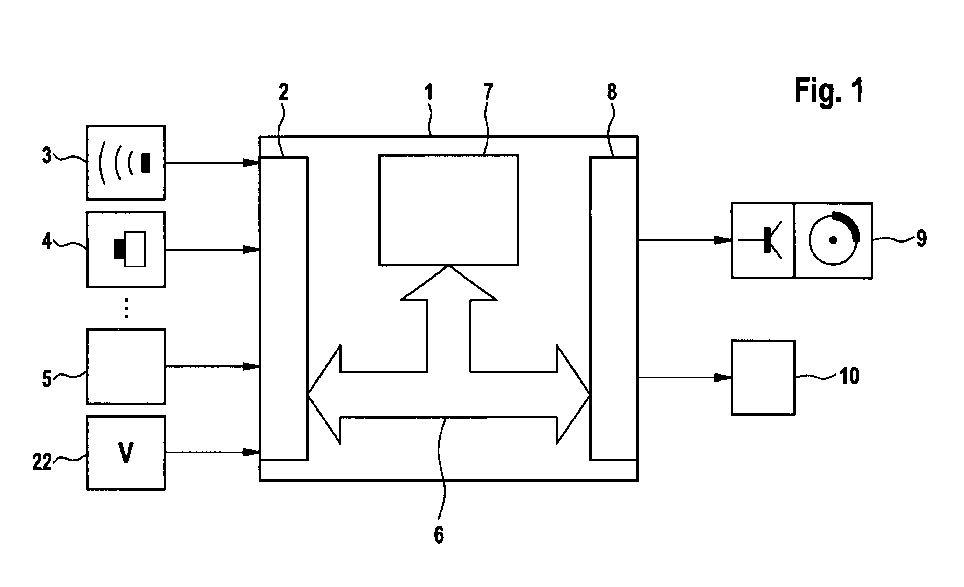

In Figur 1 ist ein schematisches Blockschaltbild einer Ausführungsform der erfindungsgemäßen Vorrichtung dargestellt. Diese weist ein Notbremssteuergerät 1 auf, das über eine Eingangsschaltung 2 verfügt. Mittels der Eingangsschaltung 2 sind dem Notbremsstcuergerät 1 Eingangssignale zuführbar, wobei diese von mindestens einer Objektdetektionssensorik 3, 4 stammt. Als Objektsdetektionssensorik ist es möglich, einen Radarsensor, einen Lidarsensor, einen Ultraschallsensor, einen Videosensor oder eine Kombination aus diesen Sensorarten vorzusehen. Diese Sensoren überwachen das Fahrzeugumfeld, insbesondere den Bereich vor dem eigenen Fahrzeug und erkennen darin befindliche Objekte. Im Rahmen der Objektsensorik kann hierbei ein oder mehrere Sensoren einer Sensorart oder mehrere Sensoren verschiedener Sensorarten verwendet werden, um das Fahrzeugumfeld ausreichend abdecken zu können sowie relevante Objekte als relevant identifizieren zu können. Insbesondere die Kombination eines oder mehrerer Radarsensoren oder Lasersensoren in Kombination mit einem Videosensor hat sich als besonders vorteilhafte Kombination erwiesen. Weiterhin können Eingangsgrößen von einem Navigationssystem 5 bereitgestellt werden, das beispielsweise in Abhängigkeit der momentanen Fahrzeugposition, die beispielsweise mittels eines Satellitennavigationsempfängers, der Bestandteil des Navigationssystems 5 ist, Zusatzdaten aus einer Datenbank bereitzustellen, mittels denen bestimmbar ist, ob die momentan befahrene Straße eine einspurige oder mehrspurige Straße ist, ob Kurven im zukünftigen Kursbereich des Fahrzeugs vorhanden sind oder ob die Straße durch bebautes Gebiet oder unbebautes Gebiet führt. Die Objektsensoren 3, 4 stellen dem Notbremssteuergerät 1 Daten bezüglich der erkannten Objekte zur Verfügung, wobei diese Objektgrößen insbesondere deren Abstand zum eigenen Fahrzeug, den Azimutwinkel der Objekte bezüglich der verlängerten Fahrzeuglängsachse, deren laterale Ausdehnung, deren Relativgeschwindigkeit umfassen können. Weiterhin ist als Eingangsgröße ein Geschwindigkeitssignal v eines Geschwindigkeitssensors 22 vorgesehen, das die Geschwindigkeit des eigenen Fahrzeugs repräsentiert. Mittels dieses Geschwindigkeitssignals v sind beispielsweise die Relativgeschwindigkeiten der mittels der Objektsensoren 3, 4 detektierten Objekte in Absolutgeschwindigkeiten umrechenbar sowie die Bestimmung der Gefährdung durch eine automatische Notbremsung in Verbindung mit den weiteren Eingangsgrößen ermittelbar. Die der Eingangsschaltung 2 des Notbremssteuergeräts 1 zugeführten Eingangsgrößen werden mittels einer Datenaustauscheinrichtung 6 an eine Berechnungseinrichtung 7 weitergeleitet. Die Berechnungseinrichtung 7 berechnet aus den Eingangsgrößen eine Kollisionswahrscheinlichkeit, wobei dieser Kollisionswahrscheinlichkeitswert K beispielsweise zwischen 0 und 1 liegen kann und angibt, mit welcher Wahrscheinlichkeit eine unausweichbare Kollision bevorsteht. Weiterhin ermittelt die Berechnungseinrichtung 7 aus den Eingangsgrößen einen Gefährdungsgrad G, der angibt, ob und wie sehr das eigene Fahrzeug sowie die detektierten Objekte durch eine mögliche, automatische Notbremsung durch weitere Kollisionen gefährdet werden würden. Der Gefährdungsgrad G kann hierbei als Zahlenwert festgelegt werden oder aber als eine von mehreren, möglichen Gefährdungsstufen definiert sein. Durch die Auswertung der Kollisionswahrscheinlichkeit K sowie des Gefährdungsgrades G entscheidet die Berechnungseinrichtung 7, ob eine Notbremsung durchgeführt werden soll oder nicht. Wird durch die Berechnungseinrichtung 7 eine automatische Notbremsung durchgeführt, so wird dieses Auslösesignal mittels der Datenaustauscheinrichtung 6 an eine Ausgangsschaltung 8 weitergeleitet, die Stellsignale an nachgeordnete Stellelemente ausgibt. Als nachgeordnete Stellelemente kann beispielsweise die Bremsanlage 9 des Fahrzeugs vorgesehen sein, die mittels elektrischen Signalen ansteuerbar ist und durch eine Bremssteuereinrichtung einen Bremsdruck aufbaut, der mittels der Radbremsen eine Fahrzeugverzögerung aufbaut, um eine Kollision zu vermeiden. Weiterhin können durch das Auslösesignal, das die Ausgangsschaltung 8 ausgibt, zusätzliche Insassenrückhaltesysteme aktiviert werden, beispielsweise indem Gurtstraffer vorgestrafft werden, so dass die Fahrzeuginsassen in einer möglichst optimalen Position sitzen um das Verletzungsrisiko möglichst gering zu halten. Weiterhin ist es möglich, als Insassenrückhaltesystem 10 Airbags zu zünden, die im Falle einer Kollision die Insassen vor schweren Verletzungen schützen. Mittels des Auslösesignals können diese Airbags in Zündbereitschaft versetzt werden, so dass diese im geeigneten Zeitpunkt auslösen oder indem eine stufenweise Zündung initiiert wird.

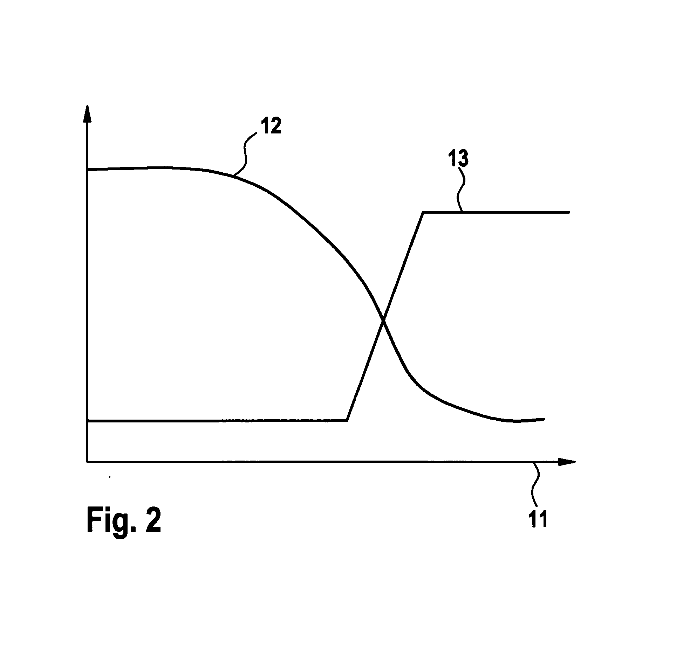

In Figur 2 ist ein Diagramm dargestellt, das die Fehlauslöserate 13 in Abhängigkeit des Gefährdungsgrads G 12 darstellt. Auf der Abszisse 11 sind verschiedene Verkehrssituationen anordenbar, wobei diese Verkehrssituationen so sortiert sind, dass sie nach ihren Gefährdungsgraden G sortiert sind. Hierdurch ergibt sich eine Kurve für den Gefährdungsgrad G 12, die entlang größer werdender Abszissenwerte, ausgehend von einer maximalen Gefährdung hin zu kleineren Gefährdungswerten G absinkt. Weiterhin ist eine Kurve für die Fehlauslöserate 13 aufgetragen, wobei diese Kurve bei Abszissenwerten, die einen hohen Gefährdungsgrad G aufweisen, mit einer niedrigen Fehlauslöserate korrelieren und bei Abszissenwerten, die einen geringen Gefährdungsgrad G aufweisen, mit einer großen Fehlauslöserate korrelieren. Dies bedeutet, dass in Situationen, in denen die Gefährdung des eigenen Fahrzeugs durch eine mögliche, automatische Notbremsung sehr groß wäre, die Fehlauslöserate gering gehalten werden muss, indem beispielsweise die Auslöseschwelle für eine automatische Notbremse hin zu höheren Werten verschoben wird. In unkritischen Fahrsituationen, in denen beispielsweise durch das Fahrzeugumfeld keine weitere Gefährdung für das eigene Fahrzeug infolge einer automatisch ausgelösten Notbremsung ausgeht, kann hingegen die Fehlauslöserate größer werden, indem beispielsweise die Auslöseschwelle für eine automatische Notbremse abgesenkt wird und damit eine eventuell durchgeführte Notbremsung ohne erfolgte Kollision keine weiteren Kollisionen oder gefährliche Fahrsituationen auslöst. Hierdurch ergibt sich der Vorteil, dass bereits in Situationen mit geringer Kollisionswahrscheinlichkeit eine Notbremsung ausgelöst werden kann, und damit der Nutzen eiuner Notbremsung höher ist, da bereits früher ausgelöst werden kann.

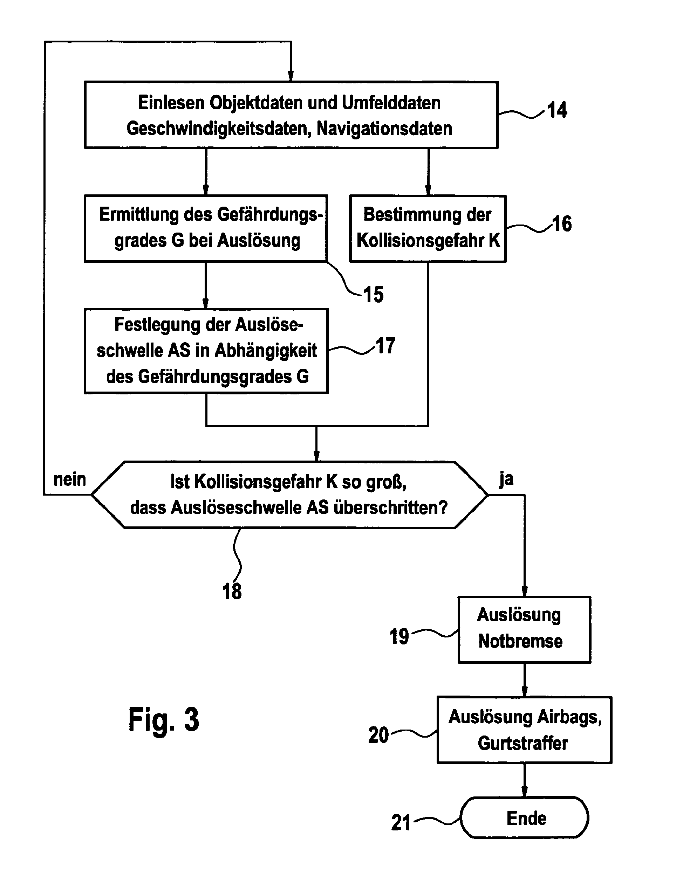

In Figur 3 ist ein Ablaufdiagramm dargestellt. Gemäß diesem Diagramm werden in Schritt 14 die Objektdaten, Umfelddaten, Geschwindigkeitsdaten sowie Navigationssystemdaten, die dem Notbremssteuergerät 1 mittels der Eingangsschaltung 2 zugeführt werden, eingelesen. Aus diesen Eingangsdaten ermittelt die Berechnungseinrichtung 7 des Notbremssteuergerätes 1 einen Gefährdungsgrad G, für den Fall, dass eine automatische Notbremsung ausgelöst werden würde. Hierzu wird insbesondere die Verkehrsdichte, die aus den Objektdaten bekannt ist, die Eigengeschwindigkeit des Fahrzeugs, die Position der stehende Objekte am Fahrbahnrand, die Anzahl der Fahrspuren der befahrenen Straße sowie die momentan benutzte Fahrspur, die beispielsweise mittels des Navigationssystems feststellbar ist, sowie mögliche Kurven im weiteren Fahrbahnverlauf sowie deren Krümmungsradien, die ebenfalls aus dem Navigationssystem bekannt sind, herangezogen. In Abhängigkeit des in Schritt 15 ermittelten Gefährdungsgrades G wird im folgenden Schritt 17 die Auslöseschwelle AS in Abhängigkeit des Gefährdungsgrades G festgelegt. Die Abhängigkeit der Auslöseschwelle AS von dem Gefährdungsgrad G kann dabei beispielsweise mittels einer Tabelle in der Berechnungseinrichtung 7 hinterlegt sein oder mittels einer Berechnungseinrichtung aus dem Zahlenwert des Gefährdungsgrades G ermittelt werden. Parallel hierzu wird aus den in Schritt 14 eingelesenen Daten in Schritt 16 die Kollisionsgefahr K bestimmt, indem aus den Positionen, den Geschwindigkeiten sowie den Bewegungsrichtungen, die mittels Objekttracking aus den vorhergehenden Objektpositionen bestimmbar sind, ermittelt, ob die Möglichkeit einer Kollision mit einem weiteren, bewegten Objekt innerhalb des Objekterfassungsbereichs der Objektsensorik möglich ist und wenn ja, welche Kollisionswahrscheinlichkeit hierfür besteht. Im folgenden Abfrageschritt 18 wird geprüft, ob die Kollisionsgefahr K so groß ist, dass die Auslöseschwelle AS überschritten wird, die in Abhängigkeit des Gefährdungsgrades G für die momentane Situation festgelegt wurde. Ist die Kollisionswahrscheinlichkeit K kleiner als die in Schritt 17 festgelegte Auslöseschwelle AS, so verzweigt Schritt 18 nach nein, da entweder keine Möglichkeit einer Kollision mit einem weiteren, bewegten Objekt besteht oder da der Gefährdungsgrad G der momentanen Fahrsituation so groß ist, dass die Auslöseschwelle AS derart vergrößert wurde, dass die Kollisionswahrscheinlichkeit K nicht ausreicht, um eine automatische Notbremsung auszulösen. Wurde hingegen in Schritt 18 festgestellt, dass die Kollisionswahrscheinlichkeit K ausreichend groß ist, so dass die Auslöseschwelle AS überschritten wird, so verzweigt Schritt 18 nach ja und es wird gemäß Schritt 19 eine automatische Notbremsung mittels der Verzögerungseinrichtungen 9 eingeleitet und durchgeführt. Optional kann weiterhin gemäß Schritt 20 vorgesehen sein, dass Insassenrückhaltesysteme aktiviert werden, indem beispielsweise Gurtstraffer und/oder Airbags zum Schutz der Insassen eingesetzt werden. Nach erfolgter Notbremsung sowie Auslösung der Insassenschutzsysteme wird das erfindungsgemäße Verfahren in Schritt 21 beendet.

## Patentansprüche

1. Verfahren zur Auslösung einer Notbremsung eines Fahrzeugs zur Vermeidung einer Kollision bzw. zur Verminderung der Kollisionsschwere, wobei das Fahrzeug mindestens einen Objektdetektionssensor (3,4) aufweist, dass in Abhängigkeit der erkannten Objekte eine Kollisionswahrscheinlichkeit ermittelt wird, und dass in Abhängigkeit der Kollisionswahrscheinlichkeit eine Notbremsung auslösbar ist (19) **dadurch gekennzeichnet dass** in Abhängigkeit der momentanen Umgebungssituation eine Gefährdung des eigenen Fahrzeugs im Falle einer Notbremsauslösung ermittelt wird (15), und die Auslöseschwelle für die Notbremsung in Abhängigkeit der ermittelten Gefährdung veränderbar (17) ist.

2. Verfahren nach Anspruch 1, **dadurch gekennzeichnet, dass**, die Veränderung der Auslöseschwelle für die Notbremsung derart erfolgt, dass wenn eine berechnete Gefährdung (15) durch die Notbremsung gering ist die Wahrscheinlichkeit für eine Fehlauslösung erhöht wird, und dass wenn eine berechnete Gefährdung (15) durch die Notbremsung höher ist die Wahrscheinlichkeit für eine Fehlauslösung verringert wird, wobei eine Fehlauslösung eine Auslösung der Verzögerungseinrichtungen (19) ist, in deren Verzögerungsverlauf keine Kollision erfolgte.

3. Verfahren nach einem der vorhergehenden Ansprüche, **dadurch gekennzeichnet, dass** die Gefährdung (15) durch die Notbremsung aus den im Fahrzeugumfeld erkannten, bewegten und stehenden Objekten ermittelbar ist.

4. Verfahren nach einem der vorhergehenden Ansprüche, **dadurch gekennzeichnet, dass** zur Berechnung der Gefährdung durch die Notbremsung
- die Anzahl der Fahrspuren der befahrenen Strasse,
- die momentan benutzte Fahrspur,
- die Verkehrsdichte durch die detektierten, bewegten Objekte der befahrenen Strasse,
- die Eigengeschwindigkeit des Fahrzeugs,
- die Positionen der stehenden Objekte am Fahrbahnrand,
- die Kurven im weiteren Fahrbahnverlauf sowie deren Krümmungsradien,
- die berechnete Kollisionswahrscheinlichkeit
oder eine Kombination hieraus ausgewertet wird.

5. Verfahren nach einem der vorhergehenden Ansprüche, **dadurch gekennzeichnet, dass** die im Fahrzeugumfeld detektierten Objekte mittels einer Objektdetektionssensorik (3,4), die aus einem einem Radarsensor, aus einem Lasersensor, aus einem Videosensor, einem Ultraschallsensor oder einer Kombination dieser Sensorarten besteht.

6. Verfahren nach einem der vorhergehenden Ansprüche, **dadurch gekennzeichnet, dass** mit der Auslösung (19) der Notbremsung Insassenrückhaltesysteme (10), insbesondere Airbags und/oder Gurtstraffer aktivierbar sind.

7. Vorrichtung zur Auslösung einer Notbremsung eines Fahrzeugs zur Vermeidung einer Kollision bzw. zur Verminderung der Kollisionsschwere, wobei das Fahrzeug mindestens einen Objektdetektionssensor (3,4) aufweist, dass die ermittelten Objektdaten einer Berechnungseinrichtung (7) zugeführt werden, die in Abhängigkeit der erkannten Objekte ermittelt, ob eine Kollision mit einem Objekt bevorsteht und in Abhängigkeit der Kollisionswahrscheinlichkeit eine Notbremsung auslösen kann **dadurch gekennzeichnet, dass** durch die Berechnungseinrichtung (7) in Abhängigkeit der von der Objektdetektionssensorik (3,4) erkannten, momentanen Umgebungssituation eine Gefährdung des eigenen Fahrzeugs im Falle einer Notbremsauslösung ermittelt wird, und dass die Auslöseschwelle für die Notbremsung derart veränderbar ist, dass die Wahrscheinlichkeit für eine Fehlauslösung erhöht wird, wenn eine berechnete Gefährdung durch die Notbremsung gering ist und dass die Auslöseschwelle für die Notbremsung derart veränderbar ist, dass die Wahrscheinlichkeit für eine Fehlauslösung verringert wird, wenn eine berechnete Gefährdung durch die Notbremsung höher ist, wobei eine Fehlauslösung eine Auslösung der Verzögerungseinrichtungen (19) ist, in deren Verzögerungsverlauf keine Kollision erfolgte.

## Claims

1. Method for triggering emergency braking of a vehicle in order to avoid a collision or to reduce the severity of a collision, wherein the vehicle has at least one object detection sensor (3, 4), wherein the probability of a collision is determined as a function of the detected objects, and wherein the emergency braking can be triggered (19) as a function of the probability of a collision, **characterized in that** a hazard posed to the driver's own vehicle in the case of triggering of the emergency braking is determined (15) as a function of the situation in the surroundings at that particular time, and the triggering threshold for the emergency braking can be changed (17) as a function of the determined hazard.

2. Method according to Claim 1, **characterized in that** the changing of the triggering threshold for the emergency braking is carried out in such a way that if a calculated hazard (15) resulting from the emergency braking is low, the probability of incorrect triggering is increased, and **in that** if a calculated hazard (15) resulting from the emergency braking is higher, the probability for incorrect triggering is reduced, wherein incorrect triggering is triggering of the deceleration devices (19) in whose deceleration profile a collision has not taken place.

3. Method according to one of the preceding claims, **characterized in that** the hazard (15) resulting from the emergency braking can be determined from the moving and stationary objects detected in the surroundings of the vehicle.

4. Method according to one of the preceding claims, **characterized in that,** in order to calculate the hazard resulting from the emergency braking,
- the number of lanes of the road being travelled on,
- the lane being used at that particular time,
- the density of the traffic resulting from the detected, moving objects on the road being travelled on,
- the speed of the driver's own vehicle,
- the positions of the stationary objects at the edge of the carriageway,
- the bends in the further profile of the carriageway and their bend radii,
- the calculated probability of a collision,
or a combination thereof is/are evaluated.

5. Method according to one of the preceding claims, **characterized in that** the objects detected in the surroundings of the vehicle by means of an object detection sensor system (3, 4), which is composed of a radar sensor, of a laser sensor, of a video sensor, an ultrasonic sensor or a combination of these types of sensor.

6. Method according to one of the preceding claims, **characterized in that** vehicle occupant restraint systems (10), in particular airbags and/or seatbelt pretensioners, can be activated with the triggering (19) of the emergency braking.

7. Device for triggering emergency braking of a vehicle in order to avoid a collision or in order to reduce the severity of a collision, wherein the vehicle has at least one object detection sensor (3, 4), wherein the object data which are determined are fed to a calculation device (7) which determines, as a function of the detected objects, whether a collision with an object is imminent, and said calculation device (7) can trigger emergency braking as a function of the probability of a collision, **characterized in that** the calculation device (7) determines, as a function of the situation in the surroundings at that particular time which is detected by the object detection sensor system (3, 4), a hazard posed to the driver's own vehicle in the case of triggering of emergency braking, and **in that** the triggering threshold for the emergency braking can be changed in such a way that the probability of incorrect triggering is increased if a calculated hazard resulting from the emergency braking is low, and **in that** the triggering threshold for the emergency braking can be changed in such a way that the probability of incorrect triggering is reduced if a calculated hazard resulting from the emergency braking is higher, wherein incorrect triggering is triggering of the deceleration devices (19) in whose deceleration profile a collision has not taken place.

## Revendications

1. Procédé de déclenchement d'un freinage d'urgence d'un véhicule en vue d'éviter une collision ou de diminuer la gravité d'une collision,
le véhicule présentant au moins une sonde (3, 4) de détection d'objets qui détermine la probabilité d'une collision en fonction de l'objet détecté, un freinage d'urgence pouvant être déclenché (19) en fonction de la probabilité de collision,
**caractérisé en ce que**
le risque entraîné pour le véhicule propre en cas de déclenchement du freinage d'urgence est détecté (15) en fonction de la situation environnante à cet instant et
**en ce que** le seuil de déclenchement du freinage d'urgence peut être modifié (17) en fonction du risque déterminé.

2. Procédé selon la revendication 1, **caractérisé en ce que** la modification du seuil de déclenchement du freinage d'urgence s'effectue en augmentant la probabilité d'un déclenchement erroné si le risque (15) calculé pour le freinage d'urgence est réduit et **en ce que** la probabilité d'un déclenchement erroné est diminuée si le risque calculé (15) pour le freinage d'urgence est plus élevé, un déclenchement erroné étant un déclenchement des dispositifs (19) de ralentissement pour lequel aucune collision n'a eu lieu.

3. Procédé selon l'une des revendications précédentes, **caractérisé en ce que** le risque (15) provoqué par le freinage d'urgence peut être déterminé à partir des objets mobiles ou fixes détectés dans l'environnement du véhicule.

4. Procédé selon l'une des revendications précédentes, **caractérisé en ce que** pour calculer le risque provoqué par le freinage d'urgence, il évalue :
- le nombre des bandes de circulation sur la chaussée utilisée par le véhicule,
- la bande de circulation utilisée à l'instant concerné,
- la densité du trafic par l'intermédiaire des objets mobiles détectés sur la bande de circulation utilisée,
- la vitesse propre du véhicule,
- la position des objets fixes sur le bord de la chaussée,
- les virages présents plus loin sur la chaussée et leur rayon de courbure,
- la probabilité calculée de collision
ou une combinaison de ces paramètres.

5. Procédé selon l'une des revendications précédentes, **caractérisé en ce que** les objets détectés dans l'environnement du véhicule le sont au moyen d'un ensemble de sondes (3, 4) de détection d'objets constitué d'une sonde radar, d'une sonde laser, d'une sonde vidéo, d'une sonde à ultrasons ou d'une combinaison de ces types de sondes.

6. Procédé selon l'une des revendications précédentes, **caractérisé en ce que** les systèmes (10) de retenue des passagers, en particulier les coussins gonflables de sécurité et/ou les tendeurs de ceinture de sécurité, peuvent être activés lors du déclenchement (19) du freinage d'urgence.

7. Dispositif de déclenchement d'un freinage d'urgence d'un véhicule en vue d'éviter une collision ou de diminuer la gravité d'une collision,
le véhicule présentant au moins une sonde (3, 4) de détection d'objets,
les données d'objets saisis étant amenées à un dispositif de calcul (7) qui détermine en fonction des objets détectés si une collision avec un objet est prévisible et qui peut déclencher un freinage d'urgence en fonction de la probabilité de collision,
**caractérisé en ce que**
en fonction de la situation environnante à cet instant, détectée par l'ensemble de sondes (3, 4) de détection d'objet, le dispositif de calcul (7) détermine si un déclenchement du freinage d'urgence entraîne un risque pour le véhicule concerné et
**en ce que** le seuil de déclenchement du freinage d'urgence peut être modifié en augmentant la probabilité d'un déclenchement erroné si le risque calculé pour le freinage d'urgence est faible,
**en ce que** le seuil de déclenchement du freinage d'urgence peut être modifié en diminuant la probabilité d'un déclenchement erroné si le risque calculé pour un freinage d'urgence est plus élevé et
**en ce qu'**un déclenchement erroné est un déclenchement des dispositifs (19) de ralentissement pour lequel aucune collision n'a eu lieu.
